# EUROPÄISCHE PATENTSCHRIFT

(11) **EP 2 239 206 B1**
(45) Veröffentlichungstag und Bekanntmachung des Hinweises auf die Patenterteilung: **09.05.2012**
(21) Anmeldenummer: 10158482.9
(22) Anmeldetag: 30.03.2010
(51) Int. Cl.: B29C 45/00, B29C 45/16

(54) **Entnahmearmatur mit einem Armaturengehäuse aus Kunststoff für Transport- und Lagerbehälter für Flüssigkeiten und Verfahren zur Herstellung des elektrisch geerdeten Anschlussflansches zur Befestigung der Entnahmearmatur an dem Entleerstutzen des Innenbehälters des Transport- und Lagerbehälters**
Removal fitting with a fitting casing made of plastic for transport and storage containers for liquids and method for producing the electrically grounded connection flange for fixing the removal fitting to the emptying support of the internal container of the transport and storage container
Armature de prélèvement dotée d'un boîtier d'armature en plastique pour récipients de transport et de stockage pour liquides et procédé de fabrication de la bride de raccordement électriquement reliée à la terre destinée à la fixation de l'armature de prélèvement sur la vidange du conteneur intérieur du récipient de transport et de stockage

(30) Priorität: 04.04.2009 DE 102009016451
(43) Veröffentlichungstag der Anmeldung: 13.10.2010
(60) Teilanmeldung: 11177802.3
(73) Patentinhaber: PROTECHNA S.A., 1701 Fribourg (CH)
(72) Erfinder:
(74) Vertreter: advotec.

(56) Entgegenhaltungen:
- EP-A1- 1 319 608
- EP-A1- 2 008 946
- EP-A1- 2 157 028
- EP-A2- 0 949 159

## Beschreibung

Die Erfindung betrifft eine Entnahmearmatur mit einem Armaturengehäuse aus Kunststoff, insbesondere einen Klappen-oder Kugelhahn, für Transport- und Lagerbehälter für Flüssigkeiten, die mit einem Innenbehälter aus Kunststoff mit einem verschließbaren Einfüllstutzen und einem Entleerstutzen zum Anschluss der Entnahmearmatur, einem Außenmantel aus Metallgitter oder Blech sowie einem palettenartigen Untergestell aus Metall oder einem zumindest teilweise elektrisch leitenden Kunststoffmaterial zum Abstützen des Innenbehälters ausgestattet sind.

Gegenstand der Erfindung ist des Weiteren ein Verfahren zur Herstellung des Anschlussflansches zur Befestigung der Entnahmearmatur an dem Entleerstutzen des Innenbehälters des Transport- und Lagerbehälters.

Bei einem in der DE 198 15 082 A1 beschriebenen Transport-und Lagerbehälter für Flüssigkeiten ist in der am Auslaufstutzen des Innenbehälters angebrachten Entnahmearmatur der gattungsgemäßen Art ein Erdungsteil angeordnet, das als ein gekrümmtes Blech oder Plättchen aus Metall ausgebildet ist, das sich über einen Teilbereich der Innenbohrung der Entnahmearmatur erstreckt und über eine Befestigungsschraube und ein Erdungskabel an das Untergestell des Behälters angeschlossen ist.

Diese Entnahmearmatur hat folgende Nachteile:

Durch die zur Anbringung des Blechs oder Plättchens aus Metall in dem Armaturengehäuse aus Kunststoff erforderliche Befestigungsschraube, die durch die Gehäusewand geschraubt wird, ist die Dichtheit der Armatur nicht gewährleistet. Bei Transport- und Lagerbehältern für bestimmte flüssige Lebensmittel ist die Verwendung von Metallteilen nicht zulässig und infolgedessen sind mit dieser Armatur ausgerüstete Behälter für derartige flüssige Lebensmittel nicht verwendbar. Schließlich besteht bei dem bekannten Flüssigkeitsbehälter die Gefahr, dass beim Transport und der Lagerung von aggressiven Flüssigkeiten das Erdungsteil von der Flüssigkeit derart beschädigt wird, dass die elektrische Erdung nicht mehr funktionstüchtig ist.

Ferner sind für Flüssigkeitsbehälter bestimmte Entnahmearmaturen mit einem antistatisch ausgerüsteten Gehäuse bekannt, die für ein Massenprodukt jedoch zu teuer sind.

Aus der EP 2 008 946 A1 ist eine Entnahmearmatur mit einem Armaturengehäuse aus Kunststoff für einen Flüssigkeitscontainer bekannt, die an einen Entleerstutzen des Flüssigkeitscontainers angeschlossen ist. Zum Anschluss des Armaturengehäuses wird ein Anschlussflansch aus elektrisch leitendem Kunststoffmaterial verwendet, auf den das Armaturengehäuse mit dem Einlaufstutzen befestigt ist und mit dem das Armaturengehäuse an den Entleerstutzen des Flüssigkeitscontainers angeschweißt ist. Der Anschlussflansch der bekannten Entnahmearmatur dient als Erdungsleiter, derart, dass an einen rohrförmigen Teilbereich des Anschlussflansches, der zwischen dem Einlaufstutzen des Armaturengehäuses und dem Entleerstutzen des Flüssigkeitscontainers angeordnet ist, ein Flanschring ausgebildet ist, der das Armaturengehäuse nach außen überragt und den Anschluss des als Erdungsleiter ausgebildeten Anschlussflansches an eine Erdungsmasse ermöglicht.

Der Erfindung liegt die Aufgabe zugrunde, die gattungsgemäße Entnahmearmatur für Transport- und Lagerbehälter für Flüssigkeiten im Hinblick auf eine sichere und umfassende Erdung zur Ableitung der sich beim Befüllen mit Flüssigkeiten und bei der Entnahme von Flüssigkeiten aufgrund von Flüssigkeitsreibung bildenden elektrischen Ladungen und eine preisgünstige Herstellung weiterzuentwickeln.

Diese Aufgabe wird erfindungsgemäß gelöst durch die Entnahmearmaturen für Transport- und Lagerbehälter für Flüssigkeiten nach Patentanspruch 1

Die Unteransprüche beinhalten vorteilhafte und zweckmäßige Weiterbildungen der Erfindung.

Die erfindungsgemäßen Entnahmearmaturen, deren Gehäuse mit einem Anschlussflansch aus Kunststoff zum Anschweißen des Gehäuses an den Entleerstutzen des Kunststoffinnenbehälters eines mit einem Außenmantel aus Metallgitter oder Blech und mit einem palettenartigen Untergestell aus elektrisch leitendem Material ausgerüsteten Transport- und Lagerbehälters für Flüssigkeiten ausgestattet ist, ermöglichen eine sichere elektrische Erdung der bei der Entleerung aus dem Innenbehälter auslaufenden Flüssigkeit über einen elektrischen Erdungsleiter, der über ein elektrisch leitendes Ringsegment einen Teilbereich der Innenwand des Anschlussflansches aus einem nichtleitenden Kunststoff mit dem palettenartigen Untergestell oder dem Außenmantel verbindet. Die Entnahmearmatur mit dem Anschlussflansch aus einem nichtleitenden Kunststoff und mit einer Erdung eines Teilbereichs der Innenwand des Anschlussflansches durch einen in den Flanschring des Anschlussflansches integrierten, mit dem palettenartigen Untergestell oder dem Außenmantel des Transport- und Lagerbehälters verbundenen Erdungsleiter aus einem elektrisch leitenden Kunststoff, der über ein Erdungskabel an das Untergestell oder den Außenmantel des Transport- und Lagerbehälters angeschlossen ist, sind wesentlich preisgünstiger als die Entnahmearmaturen nach dem Stand der Technik, deren gesamtes Kunststoffgehäuse antistatisch ausgerüstet ist.

Die Erfindung ist nachstehend anhand von Zeichnungsfiguren erläutert, die folgendes darstellen:
- Fig. 1: eine perspektivische Darstellung eines Transport- und Lagerbehälters für Flüssigkeiten,
- Fig. 2: eine perspektivische, teilweise aufgebrochene, vergrößerte Darstellung der mit einem Anschlussflansch an dem Entleerstutzen des Innenbehälters des Transport- und Lagerbehälters angeschweißten Entnahmearmatur,
- Fig. 3: eine perspektivische, vergrößerte Darstellung eines nach der 2K-Technologie in der ersten Stufe spritzgegossenen Anschlussflansches der Entnahmearmatur,
- Fig. 4: eine perspektivische, vergrößerte Darstellung des nach der 2K-Technologie in der zweiten Stufe mit einem Erdungsleiter spritzgegossenen Anschlussflansches der Entnahmearmatur,
- Fig. 5: die Stirnansicht des Anschlussflansches der Entnahmearmatur nach Fig. 4,
- Fig. 6: eine vergrößerte, perspektivische Darstellung des Auslaufbereichs des Transport- und Lagerbehälters mit der Entnahmearmatur,
- Fig. 7: eine perspektivische Darstellung eines einteilig mit einem Erdungskabel spritzgegossenen Anschlussflansches aus einem elektrisch leitfähigen Kunststoffmaterial und
- Fig. 8: die Stirnansicht des Anschlussflansches nach Fig. 7.

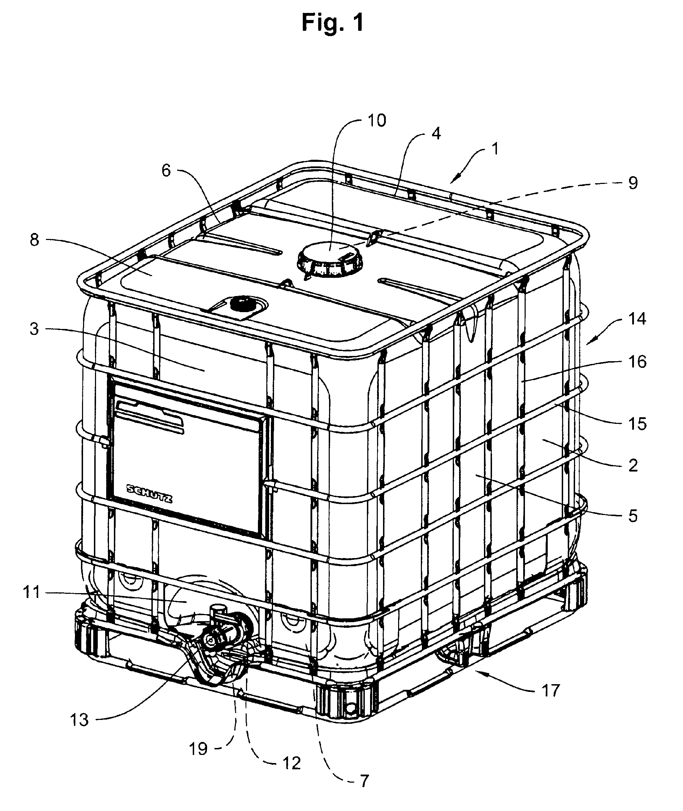

Der als Einweg- und Mehrwegbehälter einsetzbare Transport-und Lagerbehälter 1 für Flüssigkeiten nach Fig. 1 weist als Hauptbauteile einen austauschbaren, quaderförmigen Innenbehälter 2 aus Kunststoff auf mit einer Stirnwand 3, einer Rückwand 4 und zwei Seitenwänden 5,6, einem unteren als Ablaufboden ausgebildeten Boden 7 und einem oberen Boden 8, einem an diesen angeformten, mit einem Deckel 10 verschließbaren Einfüllstutzen 9 und einem an einer Einwölbung 11 im unteren Abschnitt der Stirnwand 3 des Innenbehälters angeformten Entleerstutzen 12, der mit dem Innenbehälter 2 einteilig durch Blasformen hergestellt ist, zur Anbringung einer Entnahmearmatur 13, insbesondere eines Kugel- oder Klappenhahns, ferner einen als Gittermantel ausgebildeten Außenmantel 14 mit sich kreuzenden horizontalen und vertikalen Gitterstäben 15,16 aus Metall zur Aufnahme des Innenbehälters 2 sowie ein palettenartiges Untergestell 17 mit euronormgerechten Längen- und Breitenabmessungen zur Abstützung des Innenbehälters 2.

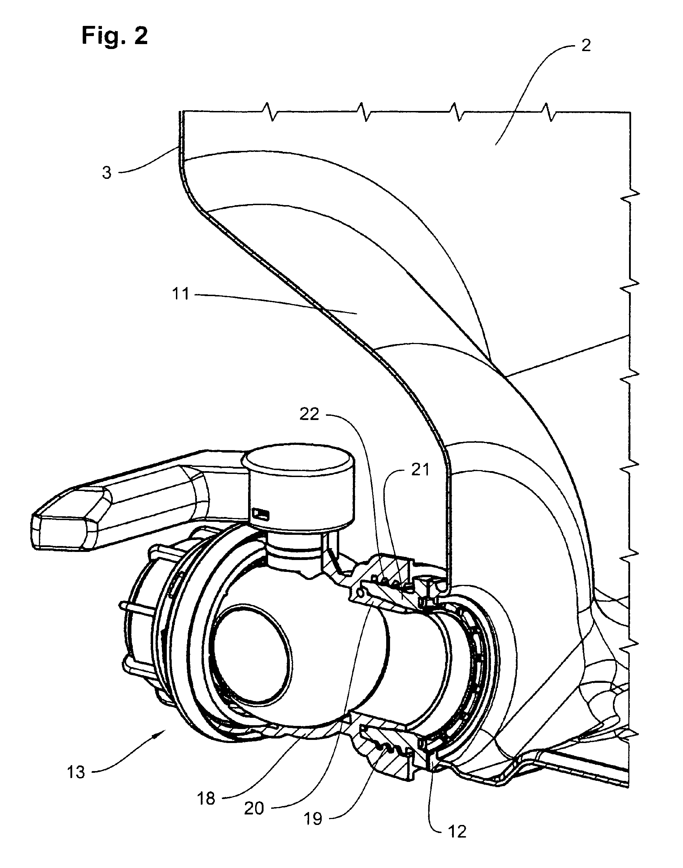

Das aus einem Polyethylen hoher Dichte (PE-HD) spritzgegossene Armaturengehäuse 18 der Entnahmearmatur 13 ist mit dem mit einem Innengewinde 19 versehenen Einlaufstutzen 20 auf einen ein entsprechendes Außengewinde 22 aufweisenden Anschlussflansch 21 aufgeschraubt und gegen diesen abgedichtet und der Anschlussflansch 21 ist zusammen mit der aufgeschraubten Entnahmearmatur 13 vorzugsweise durch Spiegelschweißen an dem Entleerstutzen 12 des Innenbehälters 2 angebracht. Der Anschlussflansch 21 ist als Spritzgussteil aus einem nichtleitenden Kunststoff, zum Beispiel Polyethylen, gefertigt (Fig. 2).

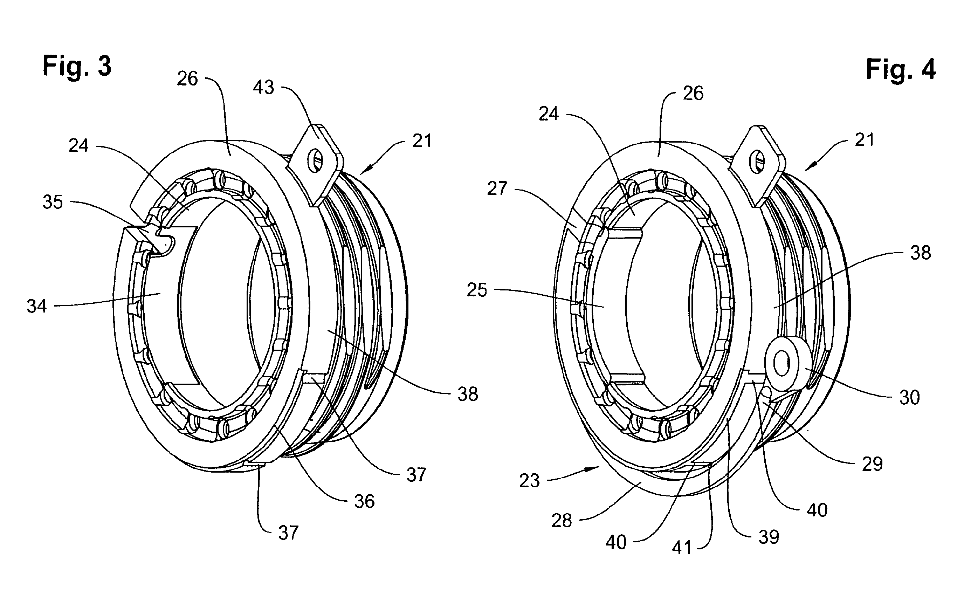

Die Entnahmearmatur 13 ist mit einer elektrischen Erdung durch einen in den Figuren 3 bis 5 dargestellten, einteilig ausgebildeten Erdungsleiter 23 aus einem elektrisch leitenden Kunststoff, beispielsweise Polyethylen mit Nanopartikeln, ausgestattet, der ein in die Innenwand 24 des Anschlussflansches 21 integriertes Ringsegment 25, einen in den Flanschring 26 des Anschlussflansches eingelassenen Verbindungssteg 27 sowie ein flexibles Kabel 28 zur elektrischen Verbindung des Anschlussflansches 21 des Armaturengehäuses 18 mit dem Untergestell 17 oder dem Außenmantel 14 des Transport- und Lagerbehälters 1 aufweist.

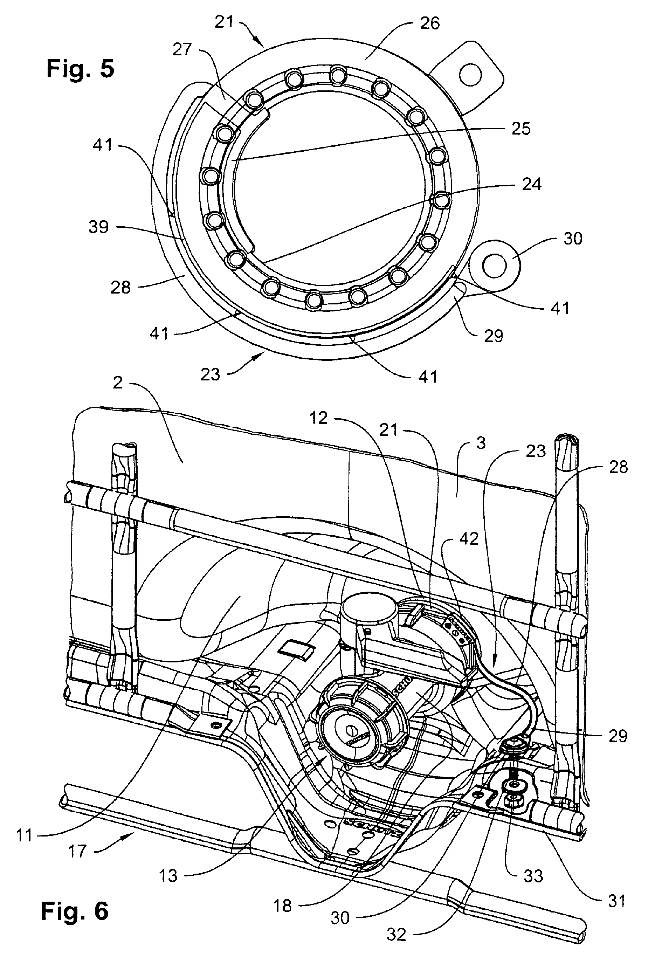

Gemäß Fig. 6 wird der Erdungsleiter 23 des Anschlussflansches 21 des Armaturengehäuses 18 mit einer am freien Ende 29 des Kabels 28 ausgebildeten Lasche 30 an dem Blechboden 31 des Untergestells 17 des Transport- und Lagerbehälters 1 mittels einer Schraube 32 und einer Mutter 33 festgeschraubt.

Der in den Figuren 3 bis 5 dargestellte Anschlussflansch 21 und der mit diesem einteilig ausgebildete Erdungsleiter 23 werden nach der 2K-Technologie mit einer Spritzgießmaschine hergestellt.

Zunächst wird in einem ersten Verfahrensschritt der Anschlussflansch 21 mit einer Aussparung 34 in der Innenwand 24 desselben für das Ringsegment 25 des Erdungsleiters 23, einer Nut 35 in dem Flanschring 26 des Anschlussflansches 21 für den Verbindungssteg 27 des Erdungsleiters 23 sowie einer ringsegmentförmigen Aussparung 36 und an diese anschließenden Nuten 37 in dem Außenrand 38 des Flanschringes 26 für einen Haltering 39 mit Haltestegen 40 und Abreißspitzen 41 für das Kabel 28 des Erdungsleiters 23 aus einem elektrisch nichtleitenden Kunststoffmaterial, beispielsweise einem Polyethylen hoher Dichte (PE-HD), spritzgegossen (Figur 3). Anschließend wird mit der gleichen Spritzgießmaschine in einem zweiten Verfahrensschritt ein elektrisch leitendes Kunststoffmaterial, beispielsweise Polyethylen mit Nanopartikeln, zur Herstellung des Erdungsleiters mit dem Ringsegment 25, dem Verbindungssteg 27 und dem Kabel 28 auf den vorgefertigten Anschlussflansch 21 aufgespritzt (Figuren 4 und 5). Nach dem Anschweißen des Anschlussflansches 21 mit dem auf diesen aufgeschraubten Armaturengehäuses 18 an den Entleerstutzen 12 des Innenbehälters 2 des Transport- und Lagerbehälters 1 wird das flexible Kabel 28 des Erdungsleiters 23 von den Abreißspitzen 41 der Haltestege 40 des Halterings 39 am Außenrand 38 des Flanschringes 26 des Anschlussflansches 21 abgetrennt.

Das in die Innenwand 24 des Anschlussflansches 21 integrierte Ringsegment 25 und die Befestigungslasche 30 am freien Ende 29 des Kabels 28 des Erdungsleiters 23 des Anschlussflansches 21 der Entnahmearmatur 13 werden mit einem Übermaß spritzgegossen und anschließend zur Verbesserung der elektrischen Leitfähigkeit abgeschält.

Das Armaturengehäuse 18 und der Anschlussflansch 21 sind durch eine Originalitätssicherung miteinander verbunden, die durch einen Sicherungsclip 42 gebildet wird, der eine an den Flanschring 26 des Anschlussflansches 21 angespritzte Lasche 43 und eine entsprechende nicht dargestellte Lasche am Armaturengehäuse 18 miteinander verbindet (Figuren 3 und 6).

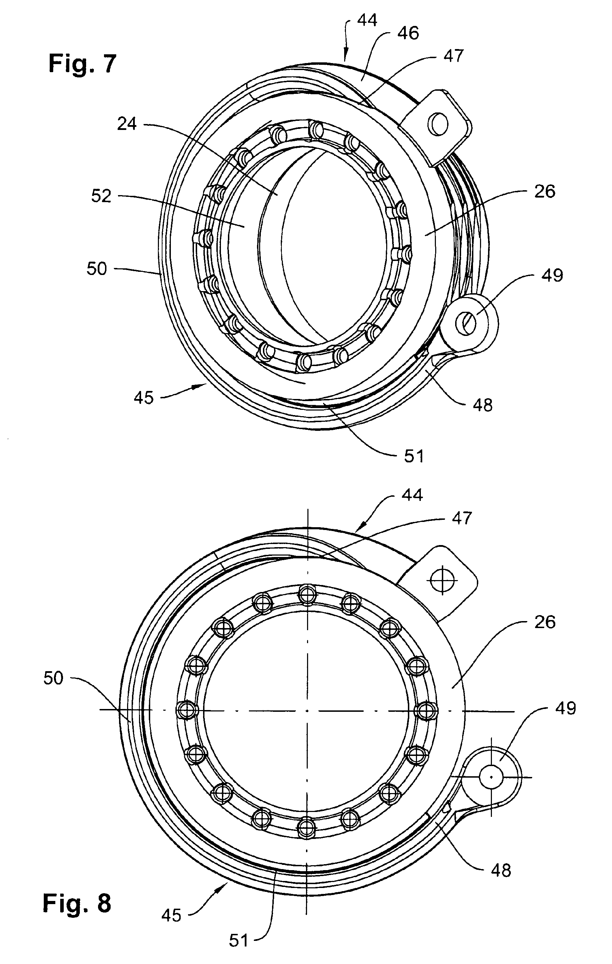

Ein weiterer in den Figuren 7 und 8 dargestellter, als Gewindeflansch ausgebildeter Anschlussflansch 44, auf den gemäß Figur 2 das Armaturengehäuse 18 mit dem Einlaufstutzen 20 aufgeschraubt und mit dem das Armaturengehäuse 18 an den Entleerstutzen 12 des Innenbehälters 2 angeschweißt wird, ist einteilig mit einem begrenzt flexiblen Erdungskabel 45 aus einem elektrisch leitenden Kunststoffmaterial, beispielsweise einem Polyethylen hoher Dichte (PE-HD) mit Nanopartikeln, spritzgegossen.

Das eine Ende 46 des Erdungskabels 45 ist durch einen Übergang 47 an dem Flanschring 26 des Anschlussflansches 44 angebunden, und das andere Ende 48 des Erdungskabels 45 weist eine Befestigungslasche 49 zur Anbringung am Untergestell 17 oder Außenmantel 14 des Transport- und Lagerbehälters 1 auf.

Der Kabelabschnitt 50 zwischen der Anbindung 47 und der Befestigungslasche 49 ist durch einen Abreißfilm 51 an den Flanschring 26 des Anschlussflansches 44 angebunden, derart, dass nach dem Anschweißen des Anschlussflansches 44 mit der Entnahmearmatur 13 an den Entleerstutzen 12 des Innenbehälters 2 der Kabelabschnitt 50 des Erdungskabels 45 zwischen Übergang 47 und Befestigungslasche 49 zur Anbringung des Kabels 45 mit der Befestigungslasche 49 an dem Untergestell 17 oder dem Außenmantel 14 des Transport- und Lagerbehälters 1 von dem Flanschring 26 des Anschlussflansches 44 abreißbar ist.

Ein zylindrischer Abschnitt 52 der Innenwand 24 des Anschlussflansches 21 ist zur Verbesserung der elektrischen Leitfähigkeit des Anschlussflansches angeschält.

## Patentansprüche

1. Entnahmearmatur mit einem Armaturengehäuse aus Kunststoff, insbesondere Klappen- oder Kugelhahn, für Transport-und Lagerbehälter für Flüssigkeiten, die mit einem Innenbehälter aus Kunststoff mit einem verschließbaren Einfüllstutzen und einem Entleerstutzen zum Anschluss der Entnahmearmatur, einem Außenmantel aus Metallgitter oder Blech sowie einem palettenartigen Untergestell aus Metall oder einem zumindest teilweise elektrisch leitenden Kunststoffmaterial zum Abstützen des Innenbehälters ausgestattet sind, mit einem als Gewindeflansch ausgebildeten Anschlussflansch (21) aus nichtleitendem Kunststoff, auf den das Armaturengehäuse (18) mit dem Einlaufstutzen (20) aufgeschraubt und mit dem das Armaturengehäuse (18) an den Entleerstutzen (12) des Innenbehälters (2) angeschweißt wird, sowie einen elektrischen, Erdung der Entnahmearmatur (13) durch einen einteilig ausgebildeten Erdungsleiter (23) aus einem elektrisch leitenden Kunststoff, der mindestens ein in die Innenwand (24) des Anschlussflansches (21) integriertes Ringsegment (25), einen in den Flanschring (26) des Anschlussflansches (21) eingelassenen Verbindungssteg (27) sowie ein flexibles Kabel (28) zur elektrischen Verbindung des Anschlussflansches (21) des Armaturengehäuses (18) mit dem Untergestell (17) oder dem Außenmantel (14) des Transport- und Lagerbehälters (1) aufweist.

2. Entnahmearmatur nach Anspruch 1, **gekennzeichnet durch** eine am freien Ende (29) des Kabels (28) des Erdungsleiters (23) des Anschlussflansches (21) des Armaturengehäuses (18) ausgebildete Lasche (30) zur Befestigung des Erdungsleiters (23) am Untergestell (17) oder am Außenmantel (14) des Transport- und Lagerbehälters (1).

3. Entnahmearmatur nach Anspruch 1 und 2, **dadurch gekennzeichnet, dass** der Erdungsleiter (23) des Anschlussflansches (21) aus einem Polyethylen hoher Dichte (PE-HD) mit Nanopartikeln besteht.

4. Verfahren zur Herstellung des Anschlussflansches und des Erdungsleiters für das Armaturengehäuse der Entnahmearmatur nach Anspruch 1 bis 3, **dadurch gekennzeichnet, dass** nach der 2K-Technologie mit einer Spritzgießmaschine in einem ersten Verfahrensschritt der Anschlussflansch (21) mit mindestens einer Aussparung (34) in der Innenwand (24) desselben für das Ringsegment (25) des Erdungsleiters (23), einer Nut (35) in dem Flanschring (26) des Anschlussflansches (21) für den Verbindungssteg (27) des Erdungsleiters (23) sowie einer ringsegmentförmigen Aussparung (36) und an diese anschließenden axialen Nuten (37) in dem Außenrand (38) des Flanschringes (26) des Anschlussflansches (21) für einen Haltring (39) mit Haltestegen (40) und Abreißspitzen (41) für das Kabel (28) des Erdungsleiters (23) aus einem nichtleitenden Kunststoffmaterial spritzgegossen wird und anschließend in einem zweiten Verfahrensschritt mit der gleichen Spritzgießmaschine ein elektrisch leitendes Kunststoffmaterial zur Herstellung des Erdungsleiters (23) mit dem Ringsegment (25), dem Verbindungssteg (27) und dem Kabel (28) auf den vorgefertigten Anschlussflansch (21) aufgespritzt wird.

5. Verfahren nach Anspruch 4, **dadurch gekennzeichnet, dass** das in die Innenwand (24) des Anschlussflansches (21) integrierte Ringsegment (25) und die Befestigungslasche (30) am freien Ende (29) des Kabels (28) des Erdungsleiters (23) des Anschlussflansches (21) der Entnahmearmatur (13) mit einem Übermaß spritzgegossen und anschließend zur Verbesserung der elektrischen Leitfähigkeit abgeschält werden.

## Claims

1. A removal fitting comprising a fitting housing made of plastic, in particular a flap or ball valve, for transport and storage containers for liquids, which are equipped with an inner container made of plastic comprising a closable filler neck and a discharge nozzle for connecting to the removal fitting, an outer jacket made of metal lattice or metal plate as well as a pallet-like base frame made of metal or an at least partially electrically conducting plastic material for supporting the inner container, comprising a coupling flange (21), which is embodied as a threaded flange, made of non-conducting plastic, to which the fitting housing (18) is screwed with the inlet port (20) and with which the fitting housing (18) is welded to the discharge nozzle (12) of the inner container (2), as well as an electrical grounding of the removal fitting (13) by means of a grounding conductor (23), which is embodied in one piece and made of an electrically conducting plastic, which encompasses at least one ring segment (25), which is integrated into the inner wall (24) of the coupling flange (21), a coupling web (27) embedded in the flange ring (26) of the coupling flange (21), as well as a flexible cable (28) for electrically connecting the coupling flange (21) of the fitting housing (18) to the base frame (17) or to the outer jacket (14) of the transport and storage container (1).

2. The removal fitting according to claim 1, **characterized by** a connecting link (30), which is embodied on the free end (29) of the cable (28) of the grounding conductor (23) of the coupling flange (21) of the fitting housing (18), for fastening the grounding conductor (23) to the base frame (17) or to the outer jacket (14) of the transport and storage container (1).

3. The removal fitting according to claim 1 and 2, **characterized in that** the grounding conductor (23) of the coupling flange (21) consists of a polyethylene having a high density (PE-HD) comprising nanoparticles.

4. A method for producing the coupling flange and the grounding conductor for the fitting housing of the removal fitting according to claim 1 to 3, **characterized in that** according to two component technology the coupling flange (21) is injection molded by means of an injection molding machine in a first method step with at least one recess (34) in the inner wall (24) thereof for the ring segment (25) of the grounding conductor (23), a groove (35) in the flange ring (26) of the coupling flange (21) for the coupling web (27) of the grounding conductor (23) as well as a ring segment-shaped recess (36) and axial grooves (37) connecting thereto in the outer edge (38) of the flange ring (26) of the coupling flange (21) for a holding ring (39) comprising holding webs (40) and tear-off tips (41) for the cable (28) of the grounding conductor (23) made of a non-conducting plastic material, and, in a second method step using the same injection molding machine, an electrically conducting plastic material for producing the grounding conductor (23) with the ring segment (25), the coupling web (27) and the cable (28) is subsequently injected onto the preassembled coupling flange (21).

5. The method according to claim 4, **characterized in that** the ring segment (25), which is integrated into the inner wall (24) of the coupling flange (21), and the connecting link (30) on the free end (29) of the cable (28) of the grounding conductor (23) of the coupling flange (21) of the removal fitting (13) are injection molded with an excess and are subsequently peeled to improve the electrical conductivity.

## Revendications

1. Robinet de déchargement avec un boîtier de robinet en matière plastique, en particulier un robinet à clapet ou à rotule, pour des récipients de stockage et de transport de liquides, équipés d'un récipient intérieur en matière plastique, avec une tubulure de remplissage fermable et une tubulure d'évacuation destinée à être branchée à un robinet de déchargement, d'une enveloppe extérieure en treillis métallique ou en tôle, ainsi que d'un châssis du genre palette en métal ou en une matière plastique au moins partiellement électriquement conductrice pour l'appui du récipient intérieur, avec une bride de raccordement (21) conçue comme une bride filetée en matière plastique non conductrice, sur laquelle est vissé le boîtier de robinet (18) avec la tubulure d'entrée (20) et avec laquelle le boîtier de robinet (18) est soudé sur la tubulure d'évacuation (12) du récipient intérieur (2), et avec une prise de terre électrique du robinet de déchargement (13) par un conducteur de terre (23) conçu en une seule pièce en matière plastique électriquement conductrice, comportant au moins un segment annulaire (25) intégré dans la paroi intérieure (24) de la bride de raccordement (21), une barrette de liaison (27) encastrée dans l'anneau de bride (26) de la bride de raccordement (21), ainsi qu'un câble souple (28) pour la liaison électrique de la bride de raccordement (21) du boîtier de robinet (18) avec le châssis (17) ou l'enveloppe extérieure (14) du récipient de stockage et de transport (1).

2. Robinet de déchargement selon la revendication 1, **caractérisé par** une boucle (30) à l'extrémité libre (29) du câble (28) du conducteur de terre (23) de la bride de raccordement (21) du boîtier de robinet (18), pour la fixation du conducteur de terre (23) au châssis (17) ou à l'enveloppe extérieure (14) du récipient de stockage et de transport (1).

3. Robinet de déchargement selon la revendication 1 ou 2, **caractérisé en ce que** le conducteur de terre (23) de la bride de raccordement (21) est constitué d'un polyéthylène à haute densité (PE-HD) avec des nanoparticules.

4. Procédé pour la fabrication d'une bride de raccordement et du conducteur de terre pour le boîtier de robinet du robinet de déchargement selon la revendication 1 à 3, **caractérisé en ce que** selon la technologie de deux composants, au cours d'une première étape de procédé avec une presse d'injection, la bride de raccordement (21) est coulée par injection en une matière plastique non conductrice, avec au moins un évidement (34) dans la paroi intérieure (24) de celle-ci, pour le segment annulaire (25) du conducteur de terre (23), une rainure (35) dans l'anneau de bride (26) de la bride de raccordement (21), pour la barrette de liaison (27) du conducteur de terre (23), ainsi qu'avec un évidement (36) en forme de segment annulaire, suivi par des rainures axiales (37) dans le bord extérieur (38) de l'anneau de bride (26) de la bride de raccordement (21), pour un anneau de support (39), avec des barrettes de support (40) et des pointes cassantes (41) pour le câble (28) du conducteur de terre (23), puis, au cours d'une deuxième étape de procédé, toujours avec la même presse d'injection, une matière plastique électriquement conductrice est appliquée par injection sur la bride de raccordement (21) préfabriquée, pour la réalisation du conducteur de terre (23), avec le segment annulaire (25), la barrette de liaison (27) et le câble (28).

5. Procédé selon la revendication 4, **caractérisé en ce que** le segment annulaire (25) intégré dans la paroi intérieure (24) de la bride de raccordement (21) ainsi que la boucle de fixation (30) à l'extrémité libre (29) du câble (28) du conducteur de terre (23) de la bride de raccordement (21) du robinet de déchargement (13) coulés par injection avec un excédent, puis pelés pour l'amélioration de la conductivité électrique.
